# EUROPEAN PATENT APPLICATION

(11) **EP 4 124 394 A2**
(43) Date of publication of application: **01.02.2023**
(21) Application number: 22183850.1
(22) Date of filing: 08.07.2022
(51) Int. Cl.: B08B 7/02, H02S 40/10, B06B 1/02

(54) **APPARATUS, SYSTEM HAVING SUCH AN APPARATUS, INVERTER AND METHOD FOR TRANSPORTING PARTICLES OF A SURFACE EDGE**

(30) Priority: 09.07.2021 DE 102021207303
(71) Applicant: Fraunhofer-Gesellschaft zur Förderung der angewandten Forschung e.V., 80686 München (DE)
(72) Inventor: FRITSCH, Tobias, 98693 Ilmenau (DE); KOSLOWSKI, Robert, 98693 Ilmenau (DE); GROSSMANN, Holger, 98693 Ilmenau (DE)
(74) Representative: König, Andreas Rudolf

(57) **Abstract**

An apparatus comprises a structure comprising a surface that has a surface edge. The apparatus comprises an actuator unit coupled to the structure and configured for generating a first vibration of the surface and a second vibration on the surface. The apparatus comprises a control unit configured for controlling the actuator unit, wherein the control unit is configured for providing a first control signal to the actuator unit and a second control signal to the actuator unit. The actuator unit is configured for generating the first vibration having a first frequency based on the first control signal, and for generating the second vibration having a different second frequency, the second vibration superimposing the first vibration to result in a combined vibration. A nodal line of the combined vibration travels towards the surface edge.

## Description

The present invention relates to an apparatus, to a system having such an apparatus, to an inverter for a photovoltaic module and to a method providing for a solution to transport particles of a surface edge by use of vibration. The present invention in particular relates to cleaning of surfaces using vibroacoustics.

Cleaning of surfaces is relevant for plenty of application fields. For example, when referring to cleaning of photovoltaic (PV) modules, in order to ensure the optimum luminous efficiency of a PV system over as long a duration as possible, the operator has to deal with cleaning the elements because photovoltaic modules become soiled. This is referred to as "cluttering" or "soiling".

Of particular importance are moist contaminations, e.g., dew with pollen, that are "baked" by the solar radiation. this leads to significant additional costs or to loss of earnings, with 50% being possible within a few weeks. Thus, it is necessary to clean the modules.

Conventionally, this is done according to the following methods:
- manual cleaning by staff on location;
- semi-automatic cleaning with cleaning devices on vehicles, e.g. tractors;
- fully automatic robotic systems carrying out cleaning on their own.

These methods, however, use brushes, sponges, and water pressure. However, there are dry-cleaning systems using compressed air and brushes.

Due to the use of brushes, these mechanical methods may scratch the PV modules and therefore significantly reduce the yield. Cleaning with water is particularly critical in arid regions.

There is, thus, a need to improve cleaning of surfaces.

The object of the present invention is, therefore, to provide for an apparatus, a system having such an apparatus, an inverter for a photovoltaic module and a method that allows a resource saving and efficient cleaning of surfaces.

This object is achieved by the subject-matter defined in the independent claims.

A recognition of the present invention is that a vibration may be used to transport particles on a surface and that an issue that such a vibration has a vibration node or a nodal point of vibration that hampers the particles to fall off a surface edge to allow removal of the particles from the surface may be addressed by using a second vibration having a different frequency that superimposes the first vibration.

According to an embodiment, an apparatus comprises a structure having a surface that has a surface edge. The apparatus comprises an actuator unit coupled to the structure and configured for generating a first vibration of the surface and a second vibration of the surface. The apparatus comprises a control unit configured for controlling the actuator unit, wherein the control unit is configured for providing a first control signal to the actuator unit and a second control signal to the actuator unit. The actuator unit is configured for generating the first vibration having a first frequency based on the first control signal and for generating the second vibration having a different second frequency, the second vibration superimposing the first vibration to result in a combined vibration. A nodal line of the combined vibration travels towards the surface edge.

According to an embodiment, a system has such an apparatus and an inverter connected to the photovoltaic module, wherein the inverter is configured for transmitting a signal to the control unit of the apparatus, the signal indicating a request to generate the combined vibration, e.g., cyclically, based on an event and/or based on a detection of power loss of the photovoltaic module.

According to an embodiment, an inverter is provided that is usable for a photovoltaic module, the inverter being configured for transmitting a signal to the control unit of an apparatus descried herein, the signal indicating a request to generate the combined vibration.

According to an embodiment, a method for vibrating a surface of a structure, the surface having a surface edge, comprises generating a first vibration of the surface, the first vibration having a first frequency, and generating a second vibration of the surface, the second vibration having a different second frequency. The method is implemented such that the second vibration superimposes the first vibration to obtain a combined vibration of the surface and such that a nodal line of the combined vibration travels towards the surface edge.

Further advantageous embodiments are defined in the dependent claims.

Preferred embodiments of the present invention are described hereinafter whilst making reference to the accompanying drawings, in which:
- Fig. 1: shows a schematic block diagram of an apparatus according to an embodiment;
- Fig. 2: shows a schematic block diagram of an apparatus according to an embodiment having a structure with an elongated surface;
- Fig. 3a: shows a schematic illustration of a combined vibration according to an embodiment using a high difference in frequencies of superimposing vibrations;

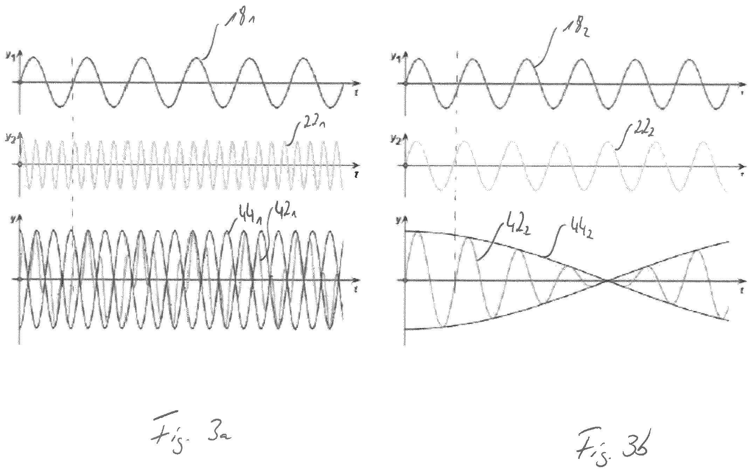

- Fig. 3a: shows a schematic illustration of a combined vibration according to an embodiment using a low difference in frequencies of superimposing vibrations;

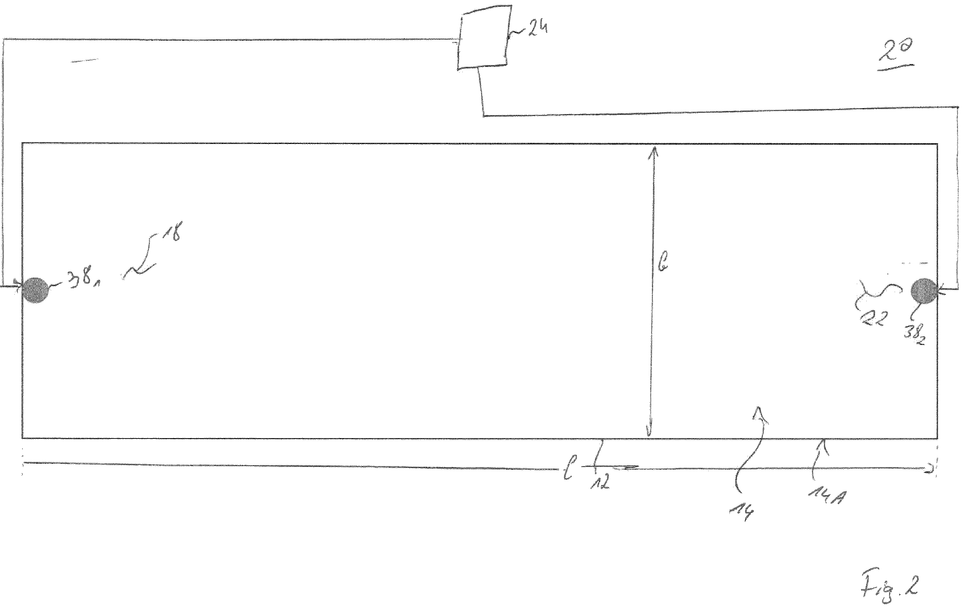

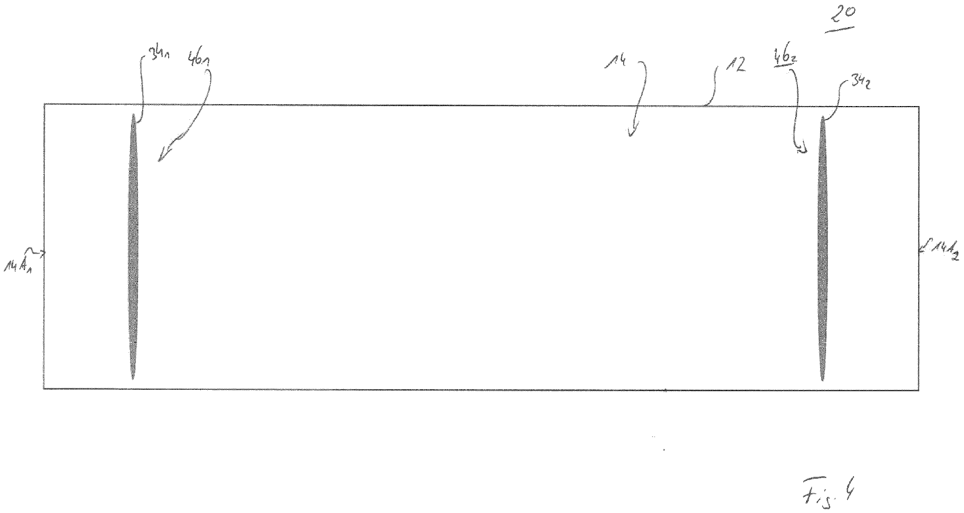

- Fig. 4: shows a condition of the apparatus of Fig. 2 with two accumulation regions according to an embodiment;

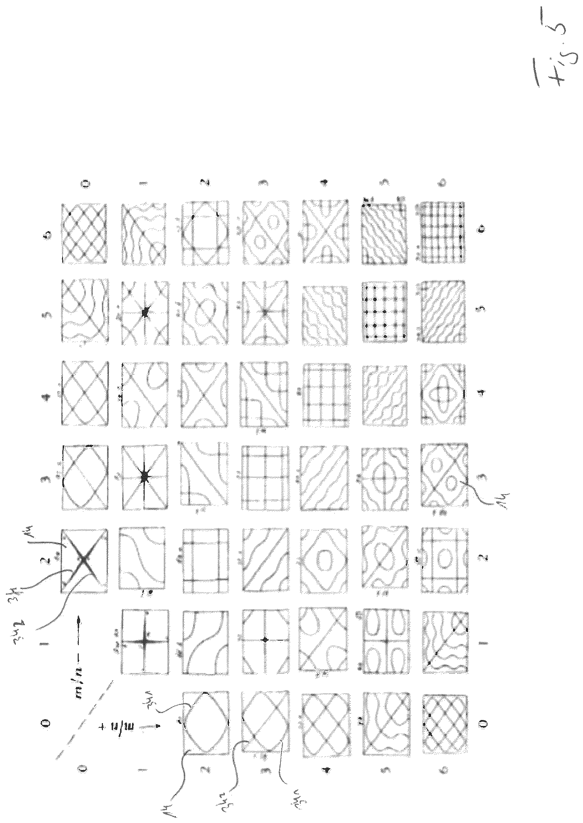

- Fig. 5: shows a schematic illustration of Chladni figures that may be obtained on the surface of an embodied apparatus;

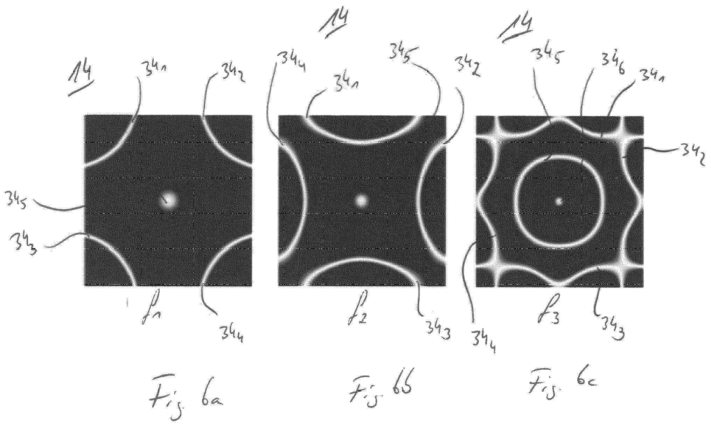

- Fig. 6a-c: show an diagrams of a surface that is excited to show example nodal lines obtained by using an excitation of different frequencies according to embodiments;

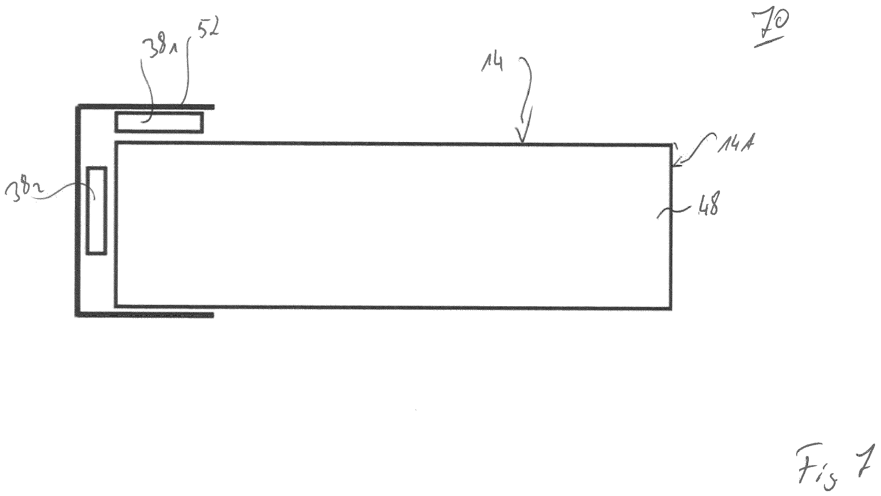

- Fig. 7: shows a schematic side view of an apparatus according to an embodiment that comprises a structure which is formed as a part of a photovoltaic module;

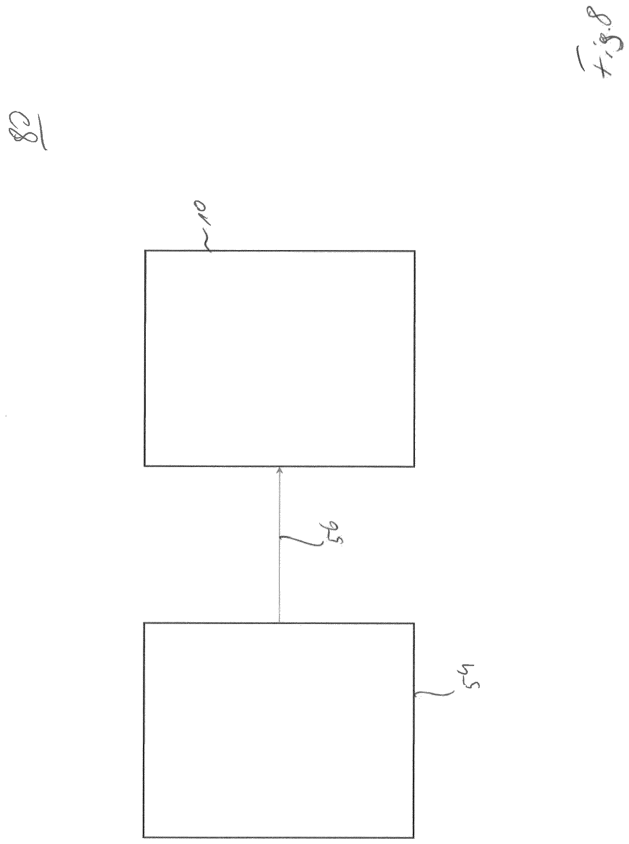

- Fig. 8: shows a schematic block diagram of a system according to an embodiment; and

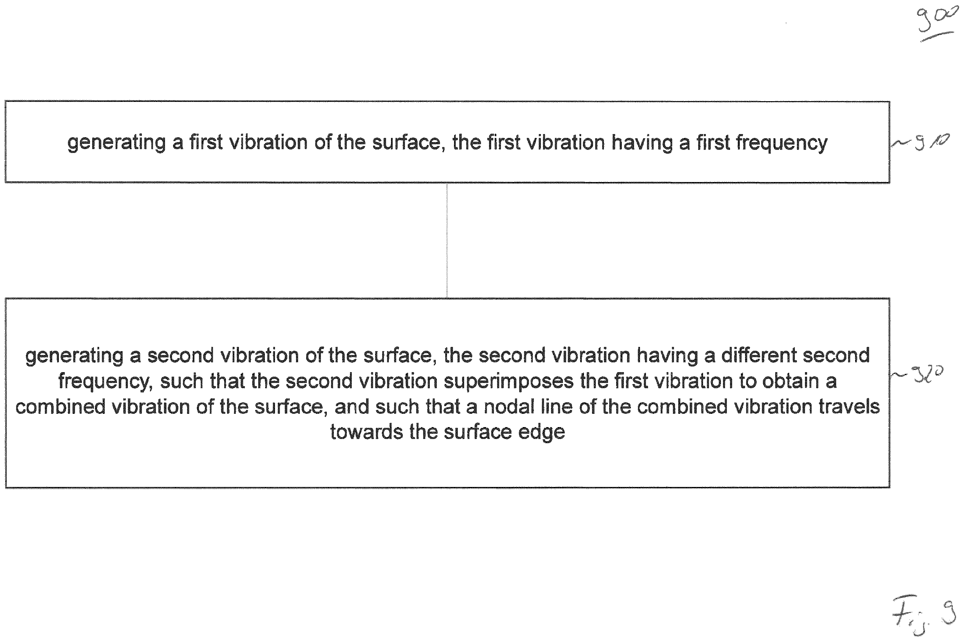

- Fig. 9: shows a schematic flow chart of a method according to an embodiment.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

Embodiments are described herein whilst making reference to a surface to be cleaning, in particular, a surface of a photovoltaic, PV, module. However, the present invention and the embodiments described are not limited to surfaces of photovoltaic modules. Surfaces being subject of embodiments described herein are neither required to be planar as they may also be curved, nor are they necessarily part of a PV module. For example, other types of surfaces may benefit from the described cleaning principle and the embodiments, for example, a roof being made of glass or other applications where particles or other types of dirt or soil leads to a decrease in technical performance and/or aesthetical appearance that would lead to a cleaning process.

Further, embodiments described herein are not limited to a cleaning of a surface. The described principle of transporting particles may be used, without limitation, for a transportation purpose, e.g., for transporting particles when dozing a specific amount particles or the like.

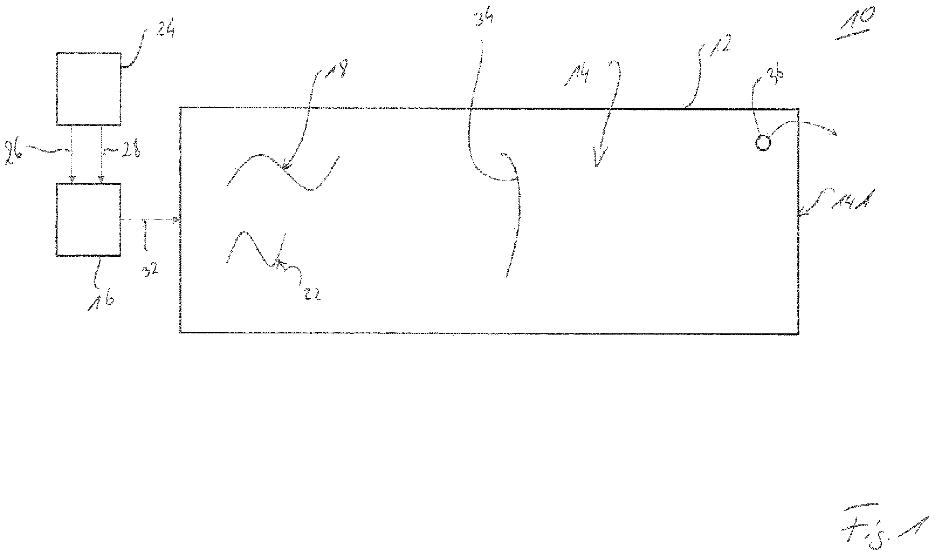

Fig. 1 shows a schematic block diagram of an apparatus 10 according to an embodiment. Apparatus 10 comprises a structure 12 that comprises a surface 14 having a surface edge 14A. Surface 14 may be a planar or curved surface having a polygon, elliptical, round, or other type of shape. By way of non-limiting example, structure 12 may comprise a photovoltaic, PV, module and the surface 14 is a surface of a PV module, e.g., the surface receiving sunlight.

Apparatus 10 comprises an actuator unit 16 comprising one or more actuators. Actuator unit 16 is coupled to the structure 14 and is configured for generating a first vibration 18 and a second vibration 22 of the surface 14. Vibrations 18 and/or 22 may comprise longitudinal and/or transversal waves or bendings of surface 14.

Apparatus 10 comprises a control unknit 24 configured for controlling the actuator unit 16. For controlling the actuator unit 16, the control unit 24 is configured for providing at least control signals 26 and 28 to the actuator unit 16 to couple respective forces 32 to the structure 12. Vibrations 18 and 22 may comprise frequencies different from one another. Whilst the first vibration 18 being based on control signal 26 may have a first frequency of the waves generated on or in surface 14, the vibration 28 being based on control signal 28 may comprise, at least temporarily, a higher or lower frequency. The vibrations 18 and 22 may superimpose one another so as to result in a combined vibration. A nodal line 34 of the combined vibration may travel towards the surface edge 14A. The actuator unit 16 may be configured for generating the combined vibration to transport particles 36 arranged on the surface 14 towards the surface edge 14A and over the surface edge 14A based on the traveling nodal line 34.

The frequencies of vibrations 18 and 22 differing from one another may result in a beat, i.e., an effect known also from acoustics. Such a beat (German: Schwebung) may provide for a travel or a movement of the nodal line 34, which may be represented by a resulting envelope illustrated in Fig. 3a and Fig. 3b and which may allow to transport one or more particles 36 over the edge 14A such that a particle 36 lying on the surface 14 may fall down from the surface.

Fig. 2 shows a schematic block diagram of an apparatus 20 according to an embodiment. Apparatus 20 comprises, for example, an elongated surface 14. The actuator unit may comprise actuators 38₁ 38₂ and possibly further actuators. According to an embodiment, actuator 38₁ is configured for generating vibration 18 whilst actuator 38₂ may be configured for generating vibration 22. For example, actuator 38₁ may be configured for receiving control signal 26, whilst actuator 38₂ may be configured for receiving control signal 28 and for operating accordingly. For example, actuators 38₁ and/or 38₂ may comprise or may be an electrodynamic transducer, a piezoelectric transducer or any other source of vibration or generation of forces, e.g., hydraulic or pneumatic actuators. Electrodynamic and/or piezoelectric transducers may allow for high forces and high frequencies to be generated.

According to an embodiment, actuators 38₁ and 38₂ may be coupled to the structure 12 adjacent to opposing regions of the surface 14, e.g., adjacent to a center of opposing short sides or long sides of a rectangular surface. Alternatively or in addition, actuators may be arranged according to other or different positions allowing to generate the aimed nodal lines and/or modes.

Fig. 3a shows a schematic illustration of a combined vibration 42₁ that may result from vibrations 18₁ and 22₁ having a comparatively high difference in frequencies when compared to the illustration of Fig. 3b. a comparatively high difference in frequency, e.g., a double or higher value of the frequency of vibration 22₁ when compared to vibration 28₁ may result in a respective high frequency of combined vibration 42₁ resulting in a respective envelope or slope 44₁. According to an embodiment, to generate the beat, the frequencies comprise a small difference of, e.g., 2 Hz or less. The closer the frequencies are the longer the envelope becomes and thus a longer period is obtained between two maxima.

When compared to Fig. 3a, a difference in frequency between vibrations 18₂ and 22₂ is lower, e.g., the difference is only some minor percent. As may be seen from a resulting combined vibration 42₂ having an envelope or slope 44₂, a frequency of the combined vibration 42₂ may be lower when compared to the combined vibration 42₁ of Fig. 3a based on the lower difference in frequency, which is known from the beat effect. The frequency of the combined vibration 42₁ and/or 42₂ may be associated with a speed of the respective nodal line and may, thus, be a controlled parameter in view of the purpose of the combined vibration, e.g., transport of particles towards the surface edge 14A, transport of the particles over the edge 14A or other purposes.

Whilst making reference again to Fig. 2 and the example numbers of two actuators 38₁ and 38₂, are an advantageous embodiment in view of a timing of the vibrations is described. Although it is possible, in accordance with embodiments, to simultaneously start and/or stop vibrations 18 and 22, according to an embodiment, the control unit 24 is configured for first controlling the actuator unit 16 to generate the first vibration 18, e.g., by controlling actuator 38₁, whilst not generating the second vibration. Not generating the second vibration may relate to not controlling actuator 38₂ to cause any vibration, but may also relate to cause actuator 38₂ with a same frequency and advantageous interface with actuator 38₁. The vibration 18 may be adapted to transport particles on the surface 14 towards an accumulation region based on a nodal line being caused by the vibration 18. Such accumulation region may be a region where an amplitude of the first vibration 18 is low or almost 0. The control unit 24 may be configured for then additionally controlling the actuator unit 16 to generate the second vibration 22 to obtain the combined vibration and a travel of the nodal line towards the surface edge 14A. For example, when controlling actuator 38₂ with a same frequency as actuator 38₁ in the beginning, the control signal 28 may then be adapted to change a frequency of operation of actuator 38₂ to deviate in view of the frequency to generate the different second vibration 22.

A point in time to add the second vibration 22 may be predetermined, e.g., based on prior measurements, iterations, tests or provided by a manufacturer and/or as being selected to provide the first vibration 18 sufficiently long. Alternatively or in addition, the control unit 24 may perform measurements to determine a sufficient travel of particles to one or more cumulation regions. For example, such a sufficient travel may be detected via an electrical impedance of one or more actuators. Without dirt and, thus, witless weight when compared to having additional dirt, a higher Q- factor of the resonances in the impedance curve may be present, detected and evaluated. This may be obtained by providing a current monitoring and/or a voltage monitoring of the actuators. Such a deviation or shift of a location of particles may locally change the weight and the resonance behavior and may provide for a source of information for the control unit that the travel has sufficiently occurred when reaching a predetermined value, predetermined relative change or exceeding a predetermined threshold of a measurement value being derived from the monitoring. However, setting a predetermined sufficiently long time for only applying the first vibration may be a simple yet effective embodiment.

For example, when referring to Fig. 4 showing a condition of apparatus 20 with two accumulation regions 46₁ and 46₂ being generated, the elongated surface 14 having an extension I > b, e.g., I >> b, and having attached thereto at least two structure-born noise transducers on opposing edges may be used to control the actuators such that one of actuators 38₁ and 38₂ generate the vibration 18 that advantageously generates a number of, e.g., 1, 2, or more nodal lines 34₁ and 34₂ near edges 14A₁ and 14A₂.

The control unit 24 may be configured for controlling the actuator unit 16 to generate vibration 18 and/or vibration 22 to comprise a nodal line at a periphery of the surface, e.g., within a region of at most 10 cm, 5cm, or 1 cm, or at a relative distance of at most 10%, 5%, 1% or less when compared to a total extension I and/or b. A frequency of said vibration to cause nodal lines 34₁ and 34₂ may be influenced, at least in parts, by a material and a dimension of structure 12. Particles arranged on surface 14 may travel to those nodal lines 34₁ and 34₂ such that based on two nodal lines 34₁ and 34₂ two accumulation regions 46₁ and 46₂ may be generated, e.g., one adjacent to each edge.

Then, a further actuator, e.g., actuator 38₂ may start to generate vibrations with a different frequency, e.g., a frequency that differs from the frequency of vibration 18 by 0.05 Hz, 0.1 Hz, 0.15 Hz, 0.2 Hz, or, for example, a different value of, for example, at most 10 Hz, 4 Hz, or 3 Hz, e.g., at most 2 Hz. For example, frequency of the second actuator is larger than the frequency of the first actuator. This may lead to an acceleration of particles towards edges 14A₁ and 14A₂. Such an acceleration may be sufficient to lead most of the particles to travel over edges 14A₁ and 14A₂, e.g., to catapult the particles over the edge.

Alternatively or in addition, the combined vibration may lead the particles to travel towards the surface edge 14A and the control unit 24 may be adapted to then switch off vibration 18 and/or 22 to provide for the acceleration of particles over the edge 14A. A sudden switching off of one of the frequencies may leave the particles in a state of acceleration while switching off an influence of the modal pattern on the surface. Thus, the particles may decelerate in whatever direction headed while the switch-off was done. This may be useful in some occasions. These occasions are influenced by material and geometry of the plate. This may be of importance when the surface is not (sufficiently) tilted or other circumstances prevent the loose particles to fall of the surface by themselves.

Remaining particles may trail or follow the first particles by amending the frequency of the beat, i.e.,. the difference of frequency. For example, a sweep to increase and decrease the frequency of the second actuator may be performed. Thereby, surface 14 may be clean from granular pollution.

In case the steps of generating the nodal lines 34₁ and 34₂ or a different number of nodal lines in a proximity of edges of the surface 14A, to generate the second vibration and to optionally sweep the second vibration is not sufficient, the cleaning may be repeated or performed again. This may lead to a realignment of remaining particles at the nodal lines followed by a generation and optionally a sweep of the beat.

Fig. 5 shows a schematic illustration of Chladni figures that may be obtained on the surface 14 by exciting different modes. Fig. 5 shows example Chladni figures for different mode numbers m and n. Different nodal lines 34 may be generated by exciting different modes, a behavior that may be used in the described embodiments. A control unit may examine, for example, a newly attached structure 12 or the surface 14 thereof, and/or may perform an analysis about a condition of an attached structure. For example, pollution may lead to a change of modes or the amplitudes when exciting the surface 14. Such a change in a behavior may be detected, for example, by using a sensor unit and/or one of the actuators to sense a response obtained when exciting the surface 14 with a specific or predetermined vibration.

According to an embodiment, the control unit of an apparatus described herein may be configured for controlling the actuator unit 16 to cause a test vibration of the surface 14A. the test vibration may be any predetermined vibration, e.g., the first vibration 18 and/or the second vibration 28 or a different vibration. The control unit may be configured for receiving a sensor signal being based on the test vibration. Such a sensor signal may be provided, for example, by an actuator of the actuator unit 16 being operated in a sensor mode, e.g., when using reciprocal transducers such as electrodynamic transducers or piezoelectric transducers. For example, when referring to apparatus 20, one of actuators 38₁ and 38₂ may be controlled to generate the test vibration and the respective other actuator may be operated as a sensor. Alternatively or in addition, a sensor unit to determine a strain and/or amplitude of vibration may be attached or coupled to structure 12 to provide the sensor signal based on a separate sensor element.

The control unit 24 may be configured for evaluating the sensor signal with respect to a structural parameter that is associated with a vibrational behavior or resonance behavior of the surface and for controlling the actuator unit 16 to adapt or control a setting of the vibration 18 and/or a setting of the vibration 22 based on the structural parameter. The structural parameter may relate, for example, to a damped amplitude, a phase shift or the like. For example, when determining that a response caused by the test vibration has changed, is in accordance with an expected value or differs from an expected value, a setting such as phase, amplitude or duration of the respective vibration may be changed. Such a change may be implemented with regard to initial values or the like that are associated with a reference mode, e.g., a reference condition of structure 12. This may allow to adapt control of actuator unit 16 to compensate, for example, a temperature effect, an aging effect or the like.

According to an embodiment that may be combined with the self-adaption, it may be implemented as the self-adaption in any of the apparatuses described herein, the control unit may be configured for implementing a kind of test mode to detect, whether the surface 14 is polluted. The control unit may be configured for controlling the actuator unit 16 to cause a test vibration of the surface, e.g., the same or different test vibration when compared to evaluating the sensor signal with respect to a structural parameter.

The actuator unit 16 or a sensor unit of the apparatus may be configured for providing a respective sensor signal being based on the test vibration. The control unit may be configured for evaluating the sensor signal with respect to a conditional parameter that is associated with a soiled condition of the surface 14 and for controlling the actuator unit 16 to generate the combined vibration based on the conditional parameter. For example, the vibration behavior may be compared against a threshold that is associated with a clean or reference condition of the surface.

A result of such an evaluation indicating that the condition of the surface is related to a pollution, may cause the control unit to perform the cleaning to drop the particles of the surface edge 14A based thereon. Such an evaluation may be performed after having performed the cleaning, e.g., to determine a success or failure of a cleaning procedure intended by the combined vibration. In case the result indicates that there is still pollution on the surface, the cleaning may be performed again. Alternatively or in addition, the control unit may be configured for evaluating the conditional parameter cyclically or based on an event, e.g., a trigger or information indicating that the surface 14 may suffer from pollution.

Prior to transporting particles to the accumulation regions 46, an apparatus described herein may be adapted to loosening the particles. The control unit 24 may be configured for controlling the actuator unit 16 to generate a loosening vibration. The loosening vibration may be or may comprise, for example, the first vibration in a same or a different amplitude or a vibration having a different frequency or, for example, a sweep or at least a set of frequencies. The loosening vibration may allow to excite at least a large area of surface 14 to possibly loosen particles that are baked onto the surface 14 or the like.

The loosening vibration may be adapted to unstick or loosen dirt from the surface 14. The control unit 24 may be configured for moving the dirt from the surface 14 based on the traveling nodal line generated by the combined vibration as described.

Fig. 6a shows an example diagram of a surface 14 that is excited to show example nodal lines obtained by using an excitation of a first frequency, e.g., around 294 Hz of an example structure. Fig. 6b shows a change of the nodal lines when increasing the frequency, e.g., to 484 Hz. Fig. 6c shows a schematic representation of the surface 14 when further increasing the frequency to, e.g., 1241 Hz. As may be seen, different frequencies result in different positions and/or orientations of nodal lines 34₁ to 34₆ and a combination of different frequencies may provide for nodal lines traveling between the respective static frequencies. Embodiments described herein may be used, for example, in connection with a photovoltaic module that may suffer from pollution in view of the generated energy. Fig. 7 shows a schematic side view of an apparatus 70 comprising a structure 48, which is, for example, structure 12 being formed as a part of a photovoltaic module, e.g., a photosensitive surface. A frame 52 may cover an edge region of structure 48 and may provide for sufficient space to arrange one or more actuators 38₁ and/or 38₂ such that at least one, some, or all actuators of the actuator unit may be arranged at an outer region of the photovoltaic module being covered by the frame 52 of the module 70.

Fig. 8 shows a schematic block diagram of a system 80 according to an embodiment. System 80 comprises apparatus 10, wherein as an alternative or in addition, a different apparatus may be present, e.g., another apparatus 10 and/or apparatus 20. Structure 12 may be any structure or may be structure 17. That is, the structure of the apparatus may comprise a PV module comprising the surface 14. System 80 comprises an inverter 54 connected to the photovoltaic module. The inverter 54 is configured for transmitting a signal 56 to apparatus 10, the control unit 24 thereof respectively, signal 56 indicating a request to generate the combined vibration. Signal 56 may be provided by inverter 54, e.g., cyclically, based on an event and/or based on a detection of power loss of the photovoltaic module or the like.

Fig. 9 shows a schematic flow chart of a method 900 according to an embodiment. A step 910 comprises generating a first vibration of the surface, e.g., the surface of apparatus 10, 20, and/or module 17, the first vibration having a first frequency. A step 920 comprises generating a second vibration of the surface, e.g., vibration 22 superimposing vibration 18, the second vibration having a different second frequency, such that the second vibration superimposes the first vibration to obtain a combined vibration of the surface. The method is implemented such that a nodal line of the combined vibration travels towards the surface edge.

As described, for example, in connection with Fig. 2, 3a, 3b, and 4, the second vibration may be started after having started the first vibration, may be obtained by changing the frequency of one of the actuators that previously generated the first vibration together and/or the second vibration may be stopped when the particles having traveled adjacent to the edge to cause the catapult effect.

The presented embodiments are intended for the cleaning of surfaces with the help of vibroacoustics, or structure-born sound. This approach may use at least two active vibration exciters. The presented method goes beyond simply loosening and displacing dirt particles. According to embodiments particles are actively moved over the edge of an object. The cleaning of solar plates or photovoltaic modules (PV modules) is here used as an example. However, the method can be easily applied to curved or even arbitrarily shaped surfaces. It could also be applied to optics, on wafers for the semiconductor industry, workbenches and machine tables, image sensors, glass panes, screen templates, fiberglass cables, vehicle body parts, building structures, and other surfaces.

Embodiments allow for a waterless and non-contact vibroacoustic dirt removal. In addition, the vibroacoustic cleaning unit is inexpensive, retrofittable, robust, and requires little maintenance. Vibroacoustic cleaning also does not lead to shade on the PV modules and therefore does not lead to loss of performance during cleaning.

### Technical realization

### Functionality: Removal of dirt from the surface (pushing dirt over the edge)

Movement of particles over or beyond the edge of the surface is opposed by the fundamental problem of reflection of a wave back in the solid bodies at the boundary surfaces with the surrounding fluid. When the structure-born soundwave strikes the edges of the component, it is reflected back into the solid body with a phase rotation. Due to this characteristic, the edge of the surface is at no frequency a nodal point without deflection. It becomes clear that well within the dimensions of the component there are areas that do not experience deflection and therefore form a collection point for resting particles.

It is the goal to excite the component such that the nodal lines are as close to the edge of the surface as possible. A beat that provokes a slight pulsating displacement of the nodal line is generated through an array of two or more structure-born sound transducers. Upon discontinuation of the beat, the particles obtain more acceleration toward the edge of the surface than can be removed within the available path on the surface. This enables a selective transport of the particles away from the surface. At least two structure-born sound transducers are required for generating these beats. For example, they are positioned on opposite edges of the component. An exemplarily cleaning sequence is described in the following:
- One, some, or all transducers set the surface into vibration that "loosens the dirt" particularly well. This depends on the quality of the surface and the type of contamination.
- The control now provides for excitation by one, some, or all transducers to provoke movement of the particles toward a desired starting position. In most cases, this desired starting position will be a position near the edge. However, it is also conceivable to transport the particles to a special depression where they are vacuumed off, for example.
- During this movement, some transducers start to transmit further specific frequencies to the component. They transport the contaminations down from the surface, as previously described. The required frequencies and excitation signals may be determined by special calculations or experimental approximation tests.

Additional functions beyond this idea are described in the following.

### Possible range of functions

### Functionality: Loosening of dirt

It is possible to use a cleaning sequence that is adapted to the prevailing contaminations. High frequency with high surface speeds and low wavelengths are useful for loosening adhesive particles. However, low frequencies with high amplitudes are required for moving heavy particles.

In addition, it is possible to clean certain areas of the surface selectively. This is done with the help of a control (e.g. wave field synthesis). Thus, it is possible to set these areas into suitable vibrations in a selective manner. Figuratively, a "cleaning wave" with a frequency and an amplitude that match the contamination is guided across the surface. For example, PV modules are conventionally mounted with an inclination of 30°.

Due to this fact, dirt is mainly collected in the lower area. Consequently, this area has to be cleaned more intensively.

### Functionality: Self-regulating

Using the reciprocity of the sound transducers (acting as a transmitter and a receiver) or introducing additional sensors (force sensors, speed sensors, deflection sensors, or microphones, etc.) into the system, controllable systems, self-regulating systems, or systems that may be monitored can be realized. Transducers here refer to systems that convert electrical signals into mechanical vibration and/or convert mechanical vibration into electrical signals.

Thus, one or several transducers could emit "pilot waves", possibly having different frequencies or frequency sequences, that are detected by another transducer or, after the reflection at an edge, by the transducer performing the excitation itself. Through propagation time, frequency, phase, and amplitude, the system could calculate parameter such as geometrical dimensions (of the component and the transducers), the elasticity of the component, wave impedance, and mass of the component, etc.

It is therefore conceivable to easily retrofit or equip the surfaces with the cleaning system. The system can adjust itself for optimum functionality.

### Functionality: Detection of dirt

The detection of dirt can be realized similarly to the regulation. By measuring the wave propagation on the surface (with the transducers themselves or with additional sensors), a conclusion to the degree of contamination may be drawn compared to a clean surface. For example, if there is weight (dirt) on the surface, the wave is attenuated more strongly.

Thus, a system that verifies the degree of contamination in regular intervals and that only becomes active in case of actual contamination is possible. In addition, in case of unsuccessful cleaning, the system may output an error message and thereby cause quick manual or robot-supported cleaning.

This is possible by acoustical signals, optical signals, electrical signals (sending an email), or radio.

Thus, the system can also learn the best cleaning signals (e.g. via machine learning) and locate the location of the contamination on the surface.

### Functionality: Integration with other systems

The automatic cleaning can also be seen as an addition to existing systems. Thus, for example, the coarse dirt can be removed before cleaning with a brush so as to reduce scratching of the surface.

In addition, automatic or semiautomatic cleaning systems may be equipped with shaker modules for gentle cleaning. Thus, not every module has to have its own transducers.

### Functionality: Cleaning before attachment of dirt

In times of strong contamination (sandstorm, pollen, morning dew, wildfires, rush hour), the attachment of the particles can be avoided by continuous cleaning. This prevents the surface from becoming encrusted with contaminations that are difficult to remove.

### Technical structure

At least two structure-born sound transducers are required for the vibroacoustic cleaning according to this method. For example, these may be unbalanced electric motors, electrodynamic shakers, piezoelectric stack actuators, or piezoelectric bending actuators. However, in addition to many possible alternatives, hydraulic or pneumatic actuators are conceivable as well.

The transducers may be attached underneath, on top of, or even within the component. In the particular case of PV modules, this depends on the construction of the same.

Photovoltaic tag modules are made of several layers. The structure below the silicone layer that generates a current upon solar irradiation depends on the desired application field as well as on manufacturer-specific construction concepts. In almost all modules, above the solar cell, there is a layer made of synthetic resin or ethylene vinyl acetate (EVA) that protects against humidity, and on top of this, there is a glass front made of safety glass. Preferably, toughened safety glass is used in this case. The layers of modules are surrounded by an aluminum frame. Within this frame, the frontal glass could be excited with structure-born sound transducers so as to transfer away the contaminations. Assembly underneath the PV modules also makes sense, particularly in case of retrofits. It might be even possible to introduce MEMS actuators into the silicone substrate of the PV modules during manufacturing of the solar cell.

Examples related to implementing the present invention are described in the following:

### Evaluation of the models

For developing suitable controls for the relationships of structure and vibration, the output values of a simulation may be compared to experimental observations. For this purpose, a FEM simulation program may be used. Such a simulation tool may be based on the finite element method (FEM). This may allow modeling and calculating of different physical processes and is characterized by the fact that different areas of physics can be loaded and considered in a simulation. It may also be observed that the position of the excitation has a large impact on the mode density and deflections of a vibrating plate.

### Transducer

Due to their small form factor, good weather resistance and mechanical robustness, piezoelectric actuators are generally well suited for operation on stand-alone PV systems. However, the advantages mentioned do not yet come into play in the application considered here. The advantages of the electrodynamic transducer are the compatibility with common audio amplifiers, as well as the possibility to generate larger displacements when compared to piezoelectric actuators. However, other transducers as described herein may also be used in addition or as an alternative.

The two structure-borne sound transducers were characterized in an experiment and in various measurements. In an experiment, they were determined using the Klippel Audio Analyzer. However, the frequency response measurement is decisive for the decision.

The frequency response of the two exciters was measured with the fourAudio software WinMF. The radiated airborne sound depends on the material properties and the geometry of the excited component. For this reason, manufacturers of structure-borne sound transducers do not usually provide data on these relationships. At this point, an exemplary plate made of aluminum with dimensions of 250×250×1mm was used. Both transducers were placed in the center. The measurement signal was amplified by a Yamaha P4050 power amplifier and the radiated airborne sound was recorded at a distance of 1m orthogonal to the plate surface by a Microtech Gefell measurement microphone using a GRAS 12AQ Power Module. A Lynx Hilo was used as AD/DA converter.

The determined frequency responses are specific for the excited plates and therefore do not characterize the transducer as an independent object. By using the same plate and an identical measurement environment, however, the necessary conclusions can still be drawn as to the respective actuator.

Due to the dependence of the bending wave propagation on the excitation frequency, the transducer with the larger frequency range is to be preferred. Especially the higher sound pressure level (SPL) in the frequency range of up to 200Hz may be of interest for the presented embodiments.

### Material

Photovoltaic modules are made up of several layers. The setup below the silicon wafers, which generate electricity when exposed to light, depends on the intended field of application and manufacturer-specific design concepts. Almost all modules have a layer of synthetic resin or ethylene vinyl acetate (EVA) above the solar cells to protect them from moisture and a glass front made of safety glass above that. Single-pane safety glass (ESG) is the preferred material here.

The layers of the module are enclosed by an aluminum frame. Within this frame, the front glass may be excited with exciters to remove dirt. With regard to other implementations, a material that allows a similar implementation may be used, e.g., glass. The setup used in an experiment that may be transferred to embodiments described herein, without limitations and that was subject to several previous iterations and such waiting times were not acceptable. Consequently, it is necessary to find a material with the closest possible properties that can be shaped by the available tools.

The implementation requires an analysis of the factors involved. The conditions for the elastic range of a material were defined. Due to the small deflections of the considered constructions, the processes can be assumed to be linearly elastic. Within this framework and with regard to subsequent calculations, the parameters of density and modulus of elasticity as well as the Poisson's ratio of glass may be considered and a best possible substitute may be found which additionally has the mentioned advantages in processability.

Aluminum is a suitable material for the following experimental setups. Within the linearly elastic range, there are significant overlaps with glass in the behavior in compression and shear loads. Further, as a metal, it can be machined on site and is accessible and available as a raw material in various thicknesses.

### Demonstrator

In the context of the present invention, a demonstrator was built to present a possible cleaning method using vibroacoustic effects. In the following sections, first, the basic concept is presented and then the theoretical considerations for the geometry of the plate are shown. Furthermore, the signal path and control are presented. Finally, a test run is documented.

### Concept

Movement of the particles beyond the edge of the plate is opposed by the fundamental problem of reflection of a wave back into the solid bodies at the interfaces with the surrounding fluid. When the structure-borne sound wave impinges on the edges of the component, it is reflected back into the solid bodies with a phase rotation. Due to this property, the edge of the plate is not a nodal point without deflection at any frequency. Areas that experience no deflection and thus form a collection point for particles testing thereon, are well within the dimensions of the component. The goal is to excite the component such that the nodal lines are as close to the edge of the plate as possible. By means of an array of two structure-borne sound transducers, a beat is to be generated which provokes a slight pulsating displacement of the nodal line. When the beat is removed, the particles should have experienced a greater acceleration towards the plate edge than can be removed within the available path on the plate surface. This allows a targeted removal of the particles from the plate surface.

At least two structure-borne sound transducers may be used to generate these beats. They are positioned at opposite edges of the component. The control initially provides for an excitation by only one of the transducers in order to provoke a movement of the particles towards a desired initial position. As this motion proceeds, the previously unused transducer begins to transmit a second frequency to the plate. In experimental approximation tests, a program sequence with two structure-borne sound transducers is developed.

### Geometry

In the following, the geometric properties of the experimental plate are defined. Due to the question in the context of PV modules, only rectangular geometries are considered. However, the invention is not limited to such structures

The propagation of bending waves is dependent on frequency and material. First, the thickness d of the aluminum plate may be dimensioned. The Cremer's cut-off frequency may be used for this purpose. The objective is to dimension a flexible component. The ratio λ_{B} < λₐᵢᵣ of the frequency-dependent bending wavelength within the plate to the wavelength in the surrounding fluid characterizes the plate to be flexible. λ_{B} may relate to the wavelength of the bending wave and λₐᵢᵣ may relate to the wavelength in air. Accordingly, the limit λ_{B} = λₐᵢᵣ should not be exceeded, but can be reached. The plate thickness is dimensioned in the experiment such that the cut-off frequency f_{g} is reached in the range of about 8kHz. Using the material parameters for aluminum from 3.1, a plate thickness of 1.5mm is calculated at a cut-off frequency of 7955.439 Hz.

The dimensions along the X and Y axes are to be understood to be the length (L/I) and width (B/b) of the plate. By experimenting with different geometries, it was observed that a ratio of L > 2B can be considered to be advantageous. Such an elongated component with the condition L ≠ nB has more vibration patterns with nodal lines running parallel to the edges than rectangles with a lower aspect ratio. According to the concept described herein particles can thus leave the surface of the component over its entire width.

For the experiment, a component of LxW = 40x12cm with a thickness of 1.5 mm was used.

### Transducer position

During the attempts to validate numerical calculations with experimental methods, the dependence of occurring vibration modes on the transducer position could be observed.

According to the concept description, a setup with two structure-borne sound transducers may be implemented, not precluding a different number to implement the invention. These are positioned centrally at the opposite, narrow edges of the plate. The transducer positioning at the edge of the plate may cause larger deflections of the component with identical driving of the actuator. This feature significantly facilitates the transport of particles resting on the plate surface.

The experiment showed that almost all particles were moved from the surface.

### Evaluation

In order to evaluate the effectiveness of the cleaning process, the observations are finally converted into empirical data. In the application case considered, two different factors indicate the efficiency. One possibility of evaluation is the ratio between soiling on the plate before and after the program run. In the context of photovoltaic modules, however, the exposed area resulting from the movement of the particles towards the nodal lines also indicates an increase in light yield.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. An apparatus comprising:
a structure (12; 48) comprising a surface (14) having a surface edge (14A);
an actuator unit (16) coupled to the structure (12; 48) and configured for generating a first vibration (18) of the surface (14) and a second vibration (22) of the surface (14); and
a control unit (24) configured for controlling the actuator unit (16), wherein the control unit (24) is configured for providing a first control signal (26) to the actuator unit (16), and a second control signal (28) to the actuator unit (16);
wherein the actuator unit (16) is configured for generating the first vibration (18) having a first frequency based on the first control signal (26); and for generating, based on the second control signal (28), the second vibration (22) having a different second frequency, the second vibration (22) superimposing the first vibration (18)to result in a combined vibration (42); wherein a nodal line (34) of the combined vibration (42) travels towards the surface edge (14A).

2. The apparatus of claim 1, wherein the structure (12; 48) comprises a photovoltaic module comprising the surface (14).

3. The apparatus of claim 2, wherein at least one, some or all actuators (38) of the actuator unit (16) are arranged at an outer region of the photovoltaic module being covered by a frame (52) of the module.

4. The apparatus of one of previous claims, wherein the actuator unit (16) is configured for generating the combined vibration (42) to transport particles (36) arranged on the surface (14) towards the surface edge (14A) and over the surface edge (14A) based on the travelling nodal line (34).

5. The apparatus of one of previous claims, wherein the control unit (24) is configured for first controlling the actuator unit (16) to generate the first vibration (18) whilst not generating the second vibration (22); the wherein the first vibration (18) is adapted to transport particles (36) on the surface (14) towards a cumulation region (46) based on a nodal line (34) being caused by the first vibration (18); wherein the control unit (24) is configured for then additionally control the actuator unit (16) to generate the second vibration (22) to obtain the combined vibration (42) and a travel of the nodal line (34) towards the surface edge (14A).

6. The apparatus of one of previous claims, wherein the actuator unit (16) comprises at least a first actuator (38₁) to generate the first vibration (18) and at least a second actuator (38₂) to generate the second vibration (22), wherein the first actuator (38₁) and the second actuator (38₂) are coupled to the structure (12; 48) adjacent to opposing regions of the surface (14), e.g., adjacent to a centre of opposing short sides of a rectangle surface.

7. The apparatus of one of previous claims, wherein the actuator unit (16) comprises an actuator (38₁, 38₂) being an electrodynamic transducer or a piezoelectric transducer.

8. The apparatus of one of previous claims, wherein the control unit (24) is configured for controlling the actuator unit (16) to generate the first vibration (18) and/or the second vibration (22) to comprise a nodal line (34) at a periphery of the surface (14).

9. The apparatus of one of previous claims, wherein the control unit (24) is configured for controlling the actuator unit (16) to generate a loosening vibration of the surface (14) prior to the combined vibration (42), the loosening vibration adapted to unstick dirt from the surface (14); wherein the control unit (24) is configured for moving the dirt from the surface (14) based on the travelling nodal line (34).

10. The apparatus of one of previous claims, wherein the control unit (24) is configured for controlling the actuator unit (16) to cause a test vibration of the surface (14), wherein the actuator unit (16) or a sensor unit is configured for providing a sensor signal being based on the test vibration; wherein the control unit (24) is configured for evaluating the sensor signal with respect to a structural parameter that is associated with a vibrational behaviour of the surface (14) and for controlling the actuator unit (16) to adapt or control a setting of the first vibration (18) and/or a setting of the second vibration (22) based on the structural parameter.

11. The apparatus of one of previous claims, wherein the control unit (24) is configured for controlling the actuator unit (16) to cause a test vibration of the surface (14), wherein the actuator unit (16) or a sensor unit is configured for providing a sensor signal being based on the test vibration; wherein the control unit (24) is configured for evaluating the sensor signal with respect to a conditional parameter that is associated with a soiled condition of the surface (14) and for controlling the actuator unit (16) to generate the combined vibration (42) based on the conditional parameter.

12. The apparatus of claim 11, wherein the control unit (24) is configured for evaluating the conditional parameter cyclically or based on an event; and/or
wherein the control unit (24) is configured for evaluating the conditional parameter again after starting the combined vibration (42) to determine a success or failure of a cleaning procedure intended by the combined vibration (42).

13. System comprising:
an apparatus according to one of previous claims, wherein the structure (12; 48) comprises a photovoltaic module comprising the surface (14);
an inverter (54) connected to the photovoltaic module;
wherein the inverter is configured for transmitting a signal to the control unit (24) of the apparatus, the signal indicating a request to generate the combined vibration (42), e.g., cyclically, based on an event and/or based on a detection of power loss of the photovoltaic module.

14. An inverter (54) for a photovoltaic module, the inverter configured for transmitting a signal to the control unit (24) of an apparatus according to one of claims 1 to 12, the signal indicating a request to generate the combined vibration (42).

15. Method (900) for vibrating a surface of a structure, the surface having a surface edge, the method comprising:
generating (910) a first vibration of the surface, the first vibration having a first frequency;
generating (920) a second vibration of the surface, the second vibration having a different second frequency;
such that the second vibration superimposes the first vibration to obtain a combined vibration of the surface; and
such that a nodal line of the combined vibration travels towards the surface edge.
